# EUROPEAN PATENT SPECIFICATION

(11) **EP 2 771 113 B1**
(45) Date of publication and mention of the grant of the patent: **23.01.2019**
(21) Application number: 12784192.2
(22) Date of filing: 25.10.2012
(51) Int. Cl.: B01J 27/19, B01J 35/10, C10G 45/08, B01J 35/02

(54) **Method of making A LOW COST AND HIGH ACTIVITY HYDROPROCESSING CATALYST**
Methode zur Herstellung eines KOSTENGÜNSTIGEN UND HOCHAKTIVEN HYDROPROCESSING-KATALYSATORS
Procédé de Préparation d'un CATALYSEUR D'HYDROTRAITEMENT À FAIBLE COÛT ET À ACTIVITÉ ÉLEVÉE

(30) Priority: 27.10.2011 US 201113283389
(43) Date of publication of application: 03.09.2014
(73) Proprietor: Shell Internationale Research Maatschappij B.V., 2596 HR The Hague (NL)
(72) Inventor: BHAN, Opinder Kishan, Katy, Texas 77450 (US)
(74) Representative: Shell Legal Services IP
(86) International application number: PCT/US2012/061845
(87) International publication number: WO 2013/063219

(56) References cited:
- US-A- 4 309 278
- US-A- 4 941 964
- US-A1- 2010 243 526

## Description

This invention relates to a method of making a hydroprocessing catalyst, and a process for hydrotreating a hydrocarbon feedstock.

In the refining of crude oils the heavy cuts including residue often are subjected to catalytic hydroprocessing to remove such components as sulfur, nitrogen, metals, and Conradson carbon through desulfurization, denitrogenation, demetallization, or asphaltene conversion or any combination thereof. Various types of heterogeneous hydroprocessing catalysts are used to promote these reactions by contacting the catalyst with feedstock under conditions of elevated temperature and pressure and in the presence of hydrogen.

One catalyst that has been found to be useful in the hydroprocessing of high boiling hydrocarbon feedstocks is disclosed in U.S. 4,738,944 (Robinson et al.). The catalyst disclosed in this patent contains nickel, phosphorus and molybdenum supported on alumina, and it contains up to about 10, usually from 1 to 8 percent, and preferably from 2 to 6 percent by weight of nickel metal components, calculated as the monoxide. The catalyst also contains from about 16 to about 23 and preferably from 19 to 21.5 percent by weight molybdenum metal components, calculated as molybdenum trioxide (MoO₃). The pore structure of the catalyst is such that it has a narrow pore size distribution with at least about 75 percent, preferably at least about 80 percent, and most preferably at least about 85 percent of the total pore volume in pores of diameter from about 50 to about 110 angstroms. Ordinarily, the catalyst has less than about 10 percent of its total pore volume in pores of diameter below about 50 angstroms.

Another hydroprocessing catalyst is disclosed in U.S. 7,824,541 (Bhan) that is particularly useful in the treatment of distillate feedstocks to manufacture low-sulfur distillate products. This catalyst is a co-mulled mixture of molybdenum trioxide, a Group VIII metal compound, and an inorganic oxide material. The co-mulled mixture is calcined. The molybdenum content of the catalyst is in the range of from 10.5 to 33 wt. %, calculated as an oxide. If the Group VIII metal component is nickel, it is present in the catalyst in the range of from 3.8 to 15.3 wt. %, calculated as an oxide. The catalyst also has a mean pore diameter that is in a specific and narrow range of from 50 to 100 angstroms. There is less than 4.5 percent of the total pore volume that is contained in its macropores having pore diameters greater than 350 angstroms and less than 1 percent of the total pore volume contained in its macropores having pore diameters greater than 1000 angstroms.

Disclosed in U.S. 7,871,513 (Bhan) is a catalyst that is useful in the hydroprocessing of heavy hydrocarbon feedstocks. This catalyst is a calcined mixture made by calcining a formed particle of a mixture comprising molybdenum trioxide, a nickel compound, and an inorganic oxide material. The molybdenum content of the catalyst is in the range upwardly to 18 wt. %, calculated as an oxide. The nickel content of the catalyst is in the range upwardly to 5.1 wt. %, calculated as an oxide. The molybdenum source used in the preparation of the catalyst is in the form of molybdenum trioxide that is in a finely divided state.

Another hydroprocessing catalyst is disclosed in US 4,941,964. The catalyst comprises a calcined particle comprising molybdenum trioxide, a nickel compound, and phosphorus pentaoxide, and is made by impregnating alumina.

While the catalysts described above have been shown to have good hydroprocessing activity, there are continuing efforts to find new or improved catalyst compositions having increased catalytic activity or improved stability, or both. Any improvement in catalyst activity can result in the lowering of required reactor temperatures in order to obtain a product of a given nitrogen, sulfur, asphaltene, or metal content from a feedstock that is contaminated with these components. The lower reactor temperatures provide for energy savings and will extend the life of a catalyst. There also are ongoing efforts to find more economical methods of manufacturing the catalyst compositions.

Heavy hydrocarbon feedstocks such as vacuum tower bottoms and resids are typically more difficult to hydrotreat to remove such components as sulfur, nitrogen, metals and carbon than the lighter distillate and naphtha feedstocks. Specially designed catalysts that are different from those used for treating the lighter hydrocarbon feedstocks can be required in order to more economically treat the heavier hydrocarbon feedstocks. So, there is an ongoing need to find new or improve catalyst compositions that have good properties for the hydroprocessing of heavy hydrocarbon feedstocks.

It is, therefore, desirable to provide an improved hydroprocessing catalyst having good catalytic activity and which is economical to manufacture. One particular desire is to provide a hydroprocessing catalyst that is particularly useful in the hydroprocessing of heavy hydrocarbon feedstocks, and, especially such feedstocks that have exceptionally high sulfur and nitrogen concentrations.

Thus, accordingly, provided is a method of making a catalyst composition comprising co-mulling an inorganic oxide material, molybdenum trioxide, a nickel compound and an oxide of phosphorus in solid form to thereby form a mixture, forming the co-mulled mixture into a particle, and calcining the particle to thereby provide a calcined particle, wherein the molybdenum trioxide is in a finely divided state of particles of a maximum dimension of less than 0.5 mm, and the phosphorus oxide is in a finely divided state of particles having a particle size of from 10 µm to 500 µm. The catalyst composition thus obtained is useful in the hydroprocessing of hydrocarbon feedstocks in a process comprising contacting it with a hydrocarbon feedstock under hydrotreating process conditions and yielding a hydrotreated hydrocarbon product.

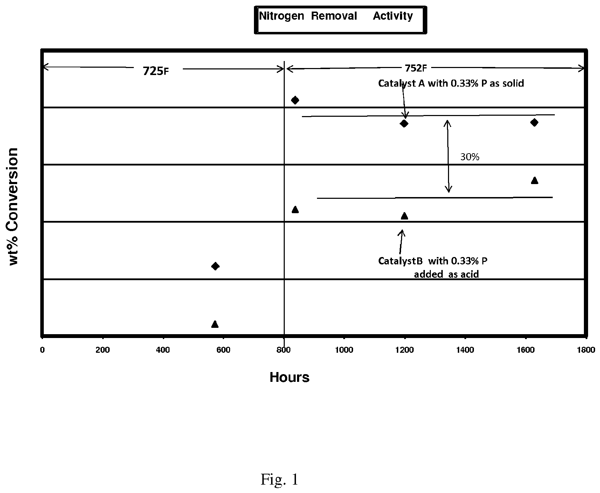

FIG. 1 presents plots of the nitrogen removal activity (represented by wt. % conversion) as a function of catalyst age for a catalyst made by the inventive method and for a comparison catalyst with the activity being determined from the use of the catalysts in an experimental hydrotreatment of a crude oil feedstock.

A novel catalyst composition has been discovered that is especially useful in the hydrotreatment of heavy hydrocarbon feedstocks that have significant concentrations of sulfur, nitrogen, metals such as vanadium and nickel, and micro-carbon residue (MCR). This catalyst composition exhibits exceptional nitrogen removal activity and has a low cost to produce due to it not being an impregnated catalyst.

The catalyst composition produced by the method of the invention comprises a calcined particle that comprises a co-mulled mixture of an inorganic oxide powder, molybdenum trioxide powder, a nickel compound and a solid phosphorus compound. The co-mulled mixture is formed into a particle that is calcined to thereby provide the calcined particle that may alone or formulated in combination with other components be suitably used in the hydrotreatment of hydrocarbon feedstocks. The co-mulled mixture, thus, may comprise, consist essentially of, or consist of inorganic oxide material, molybdenum trioxide, a nickel compound, and a solid phosphorus compound.

It is a significant feature and a requirement of the invention for the phosphorus component that is mixed with the other components of the co-mulled mixture to be in the form of an oxide of phosphorus (e.g., any of the polymorphs of phosphorus pentoxide (P₂O₅) or an oxide of phosphorus having the structure of P₄Oₙ, wherein n = 6, 7, 8, 9, or 10). The phosphorus oxide is in a finely divided state of particles having a particle size of from 10 µm to 500 µm, preferably either as a finely powdered solid or as fine particles in a suspension or slurry.

When the phosphorus component is being mixed with the other components of the co-mulled mixture, it is in a form other than as an oxyacid of phosphorus (e.g. phosphorous acid (H₃PO₃), phosphoric acid (H₃PO₄), hydrophosphorous acid (H₃PO₂)), or as a phosphorus-containing salt compound, such as, a phosphate compound with a cation such as sodium, potassium, rubidium, cesium, or ammonium, or as any of the aqueous forms of phosphate (e.g. phosphate ion (PO₄³⁻), hydrogen phosphate ion (HPO₄²⁻), dihydrogen phosphate ion (H₂PO⁴⁻) and trihydrogen phosphate (H₃PO₄)). The phosphorus component that is co-mulled along with the other components of the mixture may be phosphorus pentoxide (P₂O₅) that is, as noted above, in a powder form or solid particles of phosphorus pentoxide. The phosphorus pentoxide may be in a suspension or slurry.

Typically, in the preparation of many of the prior art hydroprocessing catalysts, the phosphorus component is added to the composition by way of impregnation by using a phosphorus-containing solution that is prepared using a salt compound of phosphorus or an oxyacid of phosphorus that is dissolved in a solvent such as water or any other phosphorus-containing compound that is dissolved in the solvent. In the invention, on the other hand, the phosphorus component of the catalyst composition is added by co-mulling the phosphorus-containing compound, as defined above and in the form of a solid particulate form of a finely divided state of particles having a particle size of from 10 µm to 500 µm, such as, a powder or a suspension of particles or a slurry of particles, with the other components of the catalyst composition to provide a mixture of the components. The mixture of components is then formed into a particle that is calcined to provide the calcined particle.

While not wishing to be bound to any particular theory as to why the use of solid phosphorus oxide in the preparation of a hydroprocessing catalyst composition provides for a more active catalyst composition than does the use of an acidic phosphorus compound, it is nevertheless thought that the incorporation of the phosphorus into the composition by using, for example, an oxyacid of phosphorus affects the pore structure of the inorganic oxide component of the composition in a negative way and differently from the way the solid phosphorus oxide does. It is also thought that the oxyacid of phosphorus reacts with the alumina of the composition mixture to form aluminum phosphate, and, thus, not as much of the phosphorus incorporates into the active metal structure of the composition. But, on the other hand, when phosphorus oxide is used in the preparation of the catalyst composition, it is thought to do a better job at incorporating itself into the molybdenum, nickel and phosphorus complex of the catalyst. It is believed that this phenomena is responsible for the improved catalyst characteristics that are observed with the composition prepared using phosphorus oxide instead of other phosphorus-containing compounds.

The amount of the solid phosphorous component mixed with the other components of the mixture should be that which is necessary to provide the desired enhanced activity benefits of the invention. Generally, the amount of the phosphorus compound co-mulled to form the mixture, which is thereafter formed into the particle that is calcined to provide the calcined particle of the catalyst composition, is such as to provide in the calcined particle a phosphorus content in the range of from 0.5 wt. % to 8 wt. % phosphorous, based on the total dry weight of the calcined particle calculated assuming the phosphorus is in the form of phosphorus pentoxide (P₂O₅). It is desirable, however, for the amount of phosphorus that is in the calcined particle to be in the range of from 0.55 wt. % to 7 wt. %. Preferably, the concentration of phosphorus pentoxide in the calcined particle is in the range of from 0.6 wt. % to 6.5 wt. %, and, most preferably, the concentration is in the range of from 0.65 wt. % to 6 wt. %.

It is desirable for the atomic ratio of phosphorus-to-molybdenum that is contained in the calcined particle to be relatively high, and, typically, it is greater than 0.04:1. It desirable, however, for the atomic ratio of phosphorus-to-molybdenum (P/Mo atomic ratio) of the calcined particle to be in the range of from 0.04:1 to 1:1, but, preferably, the P/Mo atomic ratio is in the range of from 0.05:1 to 0.9:1. More preferably, the P/Mo atomic ratio is in the range of from 0.055:1 to 0.8:1.

The amount of molybdenum trioxide that is contained in the co-mulled mixture may be such as to provide for the calcined particle having a molybdenum content in the range upwardly to 12 weight percent, as metal, (18 wt. % based on MoO₃), with the weight percent being based on the total weight of the calcined particle. Also, the molybdenum content of the calcined particle should be greater than 2 wt. %, calculated as an oxide. However, it is desirable for the amount of molybdenum trioxide that is contained in the mixture to be such as to provide for the calcined particle having a molybdenum content in the range of from 4 to 11 wt. %, as metal (6 to 16.5 wt. %, as oxide), but, preferably, from 5 to 10 wt. % (7.5 to 15 wt. %, as oxide), and, most preferably, from 6 to 9 wt. % (9 to 13.5 wt. %, as oxide).

In addition to the molybdenum trioxide component, the co-mulled mixture further contains a nickel compound. The source of the nickel component of the mixture is not as critical to the manufacture of the catalyst as is the source of the molybdenum component, and, thus, the nickel component may be selected from any suitable nickel compound that is capable of being mixed with the other components of the mixture and to be shaped into a particle that is to be calcined to form the calcined particle. The nickel compounds may include, for example, the nickel hydroxides, nickel nitrates, nickel acetates, and nickel oxides.

The amount of nickel compound that is contained in the co-mulled mixture may be such as to provide for the calcined particle having a nickel content in the range upwardly to 4 weight percent, as metal, (5.1 wt. % based on NiO), with the weight percent being based on the total weight of the calcined particle. Also, the nickel content of the calcined particle should be greater than 0.2 wt. %, calculated as an oxide. However, it is desirable for the amount of the nickel compound that is contained in the mixture to be such as to provide for the calcined particle having nickel content in the range of from 0.5 to 3.5 wt. %, as metal (0.64 to 4.45 wt. %, as oxide), but, preferably, from 1 to 3 wt. % (1.27 to 3.82 wt. %, as oxide), and, most preferably, from 1.5 to 2.5 wt. % (1.91 to 3.18 wt. %, as oxide).

In addition to the molybdenum trioxide component, the nickel compound, and the phosphorus component, the mixture further includes an inorganic oxide material. Any suitable porous inorganic refractory oxide that will provide the surface structure properties required for the catalyst may be used as the inorganic oxide material component of the mixture. Examples of possible suitable types of porous inorganic refractory oxides include silica, alumina, and silica-alumina. Preferred is either alumina or silica-alumina.

The amount of inorganic oxide material that is contained in the co-mulled mixture may be such as to provide an amount in the range of from 50 to 95 weight percent inorganic oxide material in the calcined particle with the weight percent being based on the total weight of the calcined particle. Preferably, the amount of inorganic oxide material in the calcined particle is in the range of from 60 to 92 weight percent, and, most preferably, from 70 to 89 weight percent.

The mean pore diameter of the calcined particle is typically in the range of from 70 Å to 130 Å. More typically, the mean pore diameter is in the range of form 75 Å to 125 Å, or in the range of from 80 Å to 120 Å.

It is desirable for the calcined particle to have a reasonably high surface area that exceeds 200 m²/g. Preferably, the surface area of the calcined particle exceeds 220 m²/g, and, more preferably, it exceeds 230 m²/g.

The total pore volume of the calcined particle typically exceeds 0.5 cc/g and may be in the range of from 0.5 cc/g to 1 cc/g. The percentage of the total pore volume that is contained in the pores having a diameter in the range of from 70 Å to 150 Å is in the range of from 50 percent (%) to 98 %. It is preferred that from 60 % to 97 % of the total pore volume of the calcined particle to be contained in its pores having a diameter in the range of from 70 Å to 150 Å. It is more preferred for from 70 % to 95 % of the total pore volume of the calcined particle to be contained in its pores having a diameter in the range of form 70 Å to 150 Å.

In preparing the calcined particle the starting materials are mixed by co-mulling to form a co-mulled mixture. The essential starting materials in the preparation of the co-mulled mixture include molybdenum trioxide in the form of finely divided particles of a maximum dimension of less than 0.5 mm, that may be as a dry powder or as particles in a suspension or slurry, a nickel component, an inorganic oxide material, and a solid phosphorus component. The inorganic oxide material may be selected from the group consisting of alumina, silica and alumina-silica. The solid phosphorus component is in the form as earlier described herein.

The nickel component may be selected from a group of any suitable nickel compounds that are capable of being mixed with the other components of the co-mulled mixture that is to be shaped into a particle that is calcined to form the calcined particle. The nickel component may be nickel in an oxide form, such as nickel oxide, or it may be a nickel salt compound. Nickel oxide compounds that may suitably be used include, for example, hydroxides, nitrates, acetates, and oxides of nickel. One preferred nickel compound that may be used in the preparation of the co-mulled mixture is nickel nitrate.

The phosphorus component of the composition is as described and may be selected from the group consisting of any of the oxides of phosphorus, such as, phosphorus pentoxide (P₂O₅) or the phosphorus oxides having the formula of P₄Oₙ, where n is either 6, 7, 8, 9, or 10. The phosphorus component should be in the form that it is capable of being mixed with the other components of the co-mulled mixture which is shaped into a particle.

The phosphorus component that is mixed with the other components of the mixture is in a finely divided state of particles, typically either as a finely powdered solid or as fine particles in a suspension or slurry. The particle sizes of the particulate phosphorus component used in the preparation of the mixture and calcined particle, in general, may have a maximum dimension of less than 1 mm. It is believed that it is advantageous to the invention for the solid phosphorus component used in the co-mulling step to be in the form of as small particles as is practically possible, and, therefore, the particle size of the solid phosphorus component is less than 0.5 mm. According to the method of the invention, the particle size of the solid phosphorus component is in the range of from 0.01 mm (10 µm) to 0.5 mm (500 µm), and, more typically, the particle size is in the range of from 0.02 mm (20 µlm) to 0.25 mm (250 µm). The preferred molecular form of the phosphorus component is phosphorus pentoxide.

Regarding the molybdenum source of the calcined particle, at least a major portion thereof should be predominantly molybdenum trioxide. In the mixing or co-mulling of the starting materials of the calcined particle, the molybdenum trioxide is in a finely divided state of particles, typically either as a finely powdered solid or as fine particles in a suspension or slurry. The particle sizes of the particulate molybdenum trioxide used in the manufacture of the catalyst have a maximum dimension of less than 0.5 mm (500 microns, µm), preferably, a maximum dimension of less than 0.15 mm (150 µm), more preferably, less than 0.1 mm (100 µm), and, most preferably, less than 0.075 mm (75 µm).

While it is not known with certainty, it is believed that it is advantageous to the invention for the molybdenum trioxide that is used in the manufacture of the calcined particle to be in the form of as small particles as is practically possible; so, therefore, it is not desired to have a lower limit on the size of the molybdenum trioxide particles used in the manufacture of the calcined particle. However, it is understood that the particle size of the molybdenum trioxide used in the manufacture of the calcined particle will generally have a lower limit to its size of greater than 0.2 microns. Thus, the particle size of the molybdenum trioxide used in the formation of the co-mulled mixture in the manufacture of the calcined particle is preferably in the range of from 0.2 to 150 µm, more preferably, from 0.3 to 100 µm, and, most preferably, from 0.5 to 75 µm. Typically, the size distribution of the molybdenum trioxide particles, whether in a dry powder or a suspension or otherwise, is such that at least 50 percent of the particles have a maximum dimension in the range of from 2 to 15 µm.

The formation of the co-mulled mixture may be done by any method or means known to those skilled in the art, including, but not limited to, the use of such suitable types of solids-mixing machines as tumblers, stationary shells or troughs, muller mixers, which are either batch type or continuous type, and impact mixers, and the use of such suitable types of either batchwise or continuous mixers for mixing solids and liquids or for the formation of paste-like mixtures that are extrudable. Suitable types of batch mixers include, but are not limited to, change-can mixers, stationary-tank mixers, double-arm kneading mixers that are equipped with any suitable type of mixing blade. Suitable types of continuous mixers include, but are not limited to, single or double screw extruders, trough-and-screw mixers and pug mills.

The mixing of starting materials of the calcined particle may be conducted for any suitable time period necessary to properly homogenize the co-mulled mixture. Generally, the blending time may be in the range of upwardly to 2 hours or 3 or more hours. Typically, the blending time is in the range of from 0.1 hours to 3 hours.

The term "co-mulling" is used broadly in this specification to mean that at least the recited starting materials are mixed together to form a mixture of the individual components of the co-mulled mixture that is preferably a substantially uniform or homogeneous mixture of the individual components of such co-mulled mixture. This term is intended to be broad enough in scope to include the mixing of the starting materials so as to yield a paste that exhibits properties making it capable of being extruded or formed into extrudate particles by any of the known extrusion methods. But, also, the term is intended to encompass the mixing of the starting materials so as to yield a mixture that is preferably substantially homogeneous and capable of being agglomerated into formed particles, such as, spheroids, pills or tablets, cylinders, irregular extrusions or merely loosely bound aggregates or clusters, by any of the methods known to those skilled in the art, including, but not limited to, molding, tableting, pressing, pelletizing, extruding, and tumbling.

Once the starting materials of the calcined particle are properly mixed and formed into the shaped or formed particles, a drying step may advantageously be used for removing certain quantities of water or volatiles that are included within the co-mulled mixture or formed particles. The drying of the formed particles may be conducted at any suitable temperature for removing excess water or volatiles, but, preferably, the drying temperature will be in the range of from about 75 °C to 250 °C. The time period for drying the particles is any suitable period of time necessary to provide for the desired amount of reduction in the volatile content of the particles prior to the calcination step.

The dried or undried particles are calcined in the presence of an oxygen-containing fluid, such as air, at a temperature that is suitable for achieving a desired degree of calcination. Generally, the calcination temperature is in the range of from 450 °C (842 °F) to 900 °C (1652 °F). The temperature conditions at which the particles are calcined can be important to the control of the pore structure of the calcined particle. Due to the presence of the molybdenum trioxide in the formed particles, the calcination temperature required to provide for a calcined particle having the required pore structure is higher than typical temperatures required to calcine other compositions containing inorganic oxide materials, especially those that do not contain molybdenum trioxide. But, in any event, the temperature at which the formed particles are calcined to provide the calcined particle is controlled so as to provide the calcined particle having the pore structure properties as described in detail herein. The preferred calcination temperature is in the range of from 700 °C (1292 °F) to 820 °C (1508 °F), and, most preferably, from 648 °C (1198 °F) to 790 °C (1454 °F).

The calcined particle, either alone or as a component of another composition, is particularly useful as a high activity hydroprocessing catalyst for use in the hydroprocessing of a heavy feedstock stream that has high contents of pitch, organic metals such as nickel and vanadium compounds, sulfur, and nitrogen. Prior to its use, the calcined particle may, but is not required to, be sulfided or activated by any of the methods known to those skilled in the art. Generally, in its use in the hydroprocessing of a hydrocarbon feedstock, the calcined particle is contained within a reaction zone, such as that which is defined by a reactor vessel, wherein a hydrocarbon feedstock is contacted with the calcined particle under suitable hydroprocessing reaction conditions and from which a treated hydrocarbon product is yielded.

The preferred hydrocarbon feedstock of the inventive process is a heavy hydrocarbon feedstock. The heavy hydrocarbon feedstock may be derived from any of the high boiling temperature petroleum cuts such as atmospheric tower gas oils, atmospheric tower bottoms, vacuum tower gas oils, and vacuum tower bottoms or resid. It is a particularly useful aspect of the inventive process to provide for the hydroprocessing of a heavy hydrocarbon feedstock that can be generally defined as having a boiling temperature at its 5% distillation point, i.e. T(5), that exceeds 300 °C (572 °F) as determined by using the testing procedure set forth in ASTM D-1160. The invention is more particularly directed to the hydroprocessing of a heavy hydrocarbon feedstock having a T(5) that exceeds 315 °C (599 °F) and, even, one that exceeds 340 °C (644 °F).

The heavy hydrocarbon feedstock further may include heavier hydrocarbons that have boiling temperatures above 538 °C (1000 °F). These heavier hydrocarbons are referred to herein as pitch. The heavy hydrocarbon feedstock may include as little as 10 volume percent pitch or as much as 90 volume percent pitch, but, generally, the amount of pitch included in the heavy hydrocarbon feedstock is in the range of from 20 to 80 volume percent. And, more typically, the pitch content in the heavy hydrocarbon feedstock is in the range of from 30 to 75 volume percent.

The heavy hydrocarbon feedstock further may include a significantly high sulfur content. One of the special features of the invention is that it provides for the desulfurization or demetallization, or both, of the heavy hydrocarbon feedstock. The sulfur content of the heavy hydrocarbon feedstock is primarily in the form of organic sulfur-containing compounds, which may include, for example, mercaptans, substituted or unsubstituted thiophenes, heterocyclic compounds, or any other type of sulfur-containing compound.

A feature of the invention is that it provides for the desulfurization of the heavy feedstock that has a significantly high sulfur content, such as a sulfur content that is typically much greater than 1 weight percent, so as to provide for a treated hydrocarbon product having a reduced sulfur content, such as a sulfur content of less than 1 weight percent, preferably, less than 0.75 wt. %, and, more preferably, less than 0.5 wt. %.

When referring herein to the sulfur content of either the heavy hydrocarbon feedstock or the treated hydrocarbon product, the weight percents are determined by the use of testing method ASTM D-4294.

The inventive process may also provide for the denitrogenation of the heavy feedstock that has a significant nitrogen content.

The inventive process is particularly useful in the processing of a heavy hydrocarbon feedstock that has a sulfur content exceeding 2 weight percent, and with such a heavy hydrocarbon feedstock, the sulfur content may be in the range of from 2 to 8 weight percent. The catalyst produced by the method of the invention is especially useful in the processing of a heavy hydrocarbon feedstock having an especially high sulfur content of exceeding 3 or even 4 weight percent and being in the range of from 3 to 7 weight percent or even from 4 to 6.5 weight percent.

The inventive process may also utilize the calcined particle as a catalyst in the hydroprocessing of the heavy hydrocarbon feedstock to provide for the simultaneous desulfurization, denitrogenation, conversion of Microcarbon residue, and removal of vanadium and nickel. In this process, the heavy hydrocarbon feedstock is contacted with the catalyst under suitable hydrodesulfurization and hydroconversion process conditions and the treated hydrocarbon product is yielded.

The heavy hydrocarbon feedstock may also have a nickel content. The nickel content of the heavy hydrocarbon feedstock of the inventive process, thus, can have a concentration of contaminant nickel that is typically in the form of organic nickel compounds. The nickel concentration of the heavy hydrocarbon feedstock typically can be in the range of from 2 ppmw to 250 ppmw. Often, the heavy hydrocarbon feedstock can have a concentration of nickel that is in the range of from 5 ppmw to 225 ppmw, and, more often the nickel concentration is in the range of from 7 ppmw to 200 ppmw.

The heavy hydrocarbon feedstock may also have a vanadium concentration that may typically be in the range of from 5 ppmw to 250 ppmw. It is desirable for the heavy hydrocarbon feedstock to contain as little vanadium as possible, but, the composition provides for demetallization, and, thus, the removal of vanadium from the heavy hydrocarbon feedstock. More typically, the vanadium concentration of the heavy hydrocarbon feedstock is in the range of from 10 ppmw to 225 ppmw.

The treated hydrocarbon product should have a reduced sulfur content that is below that of the heavy hydrocarbon feedstock, such as a sulfur content of less than 1 weight percent. It is recognized that the inventive process, however, may have the capability of effectively desulfurizing the heavy hydrocarbon feedstock to provide the treated hydrocarbon product having a reduced sulfur content of less than 0.5 and even less than 0.4 weight percent based on the amount of catalyst used relative to feed volume.

The calcined particle (catalyst) may be employed as a part of any suitable reactor system that provides for the contacting of the catalyst with the heavy hydrocarbon feedstock under suitable hydroprocessing conditions that may include the presence of hydrogen and an elevated total pressure and temperature. Such suitable reaction systems can include fixed catalyst bed systems, ebullating catalyst bed systems, slurried catalyst systems, and fluidized catalyst bed systems. The preferred reactor system is that which includes a fixed bed of the catalyst contained within a reactor vessel equipped with a reactor feed inlet means, such as a feed nozzle, for introducing the heavy hydrocarbon feedstock into the reactor vessel, and a reactor effluent outlet means, such as an effluent outlet nozzle, for withdrawing the reactor effluent or the treated hydrocarbon product from the reactor vessel.

The inventive process generally operates at a hydroprocessing (hydroconversion and hydrodesulfurization) reaction pressure in the range of from 2298 kPa (300 psig) to 20,684 kPa (3000 psig), preferably from 10,342 kPa (1500 psig) to 17,237 kPa (2500 psig), and, more preferably, from 12,411 kPa (1800 psig) to 15,513 kPa (2250 psig). The hydroprocessing reaction temperature is generally in the range of from 340 °C (644 °F) to 480 °C (896 °F), preferably, from 360 °C (680 °F) to 455 °C (851 °F), and, most preferably, from 380 °C (716 °F) to 425 °C (797 °F).

The flow rate at which the heavy hydrocarbon feedstock is charged to the reaction zone of the inventive process is generally such as to provide a liquid hourly space velocity (LHSV) in the range of from 0.01 hr⁻¹ to 3 hr⁻¹. The term "liquid hourly space velocity", as used herein, means the numerical ratio of the rate at which the heavy hydrocarbon feedstock is charged to the reaction zone of the inventive process in volume per hour divided by the volume of catalyst contained in the reaction zone to which the heavy hydrocarbon feedstock is charged. The preferred LHSV is in the range of from 0.05 hr⁻¹ to 2 hr⁻¹, more preferably, from 0.1 hr⁻¹ to 1.5 hr⁻¹ and, most preferably, from 0.2 hr⁻¹ to 0.7 hr⁻¹.

It is preferred to charge hydrogen along with the heavy hydrocarbon feedstock to the reaction zone of the inventive process. In this instance, the hydrogen is sometimes referred to as hydrogen treat gas. The hydrogen treat gas rate is the amount of hydrogen relative to the amount of heavy hydrocarbon feedstock charged to the reaction zone and generally is in the range upwardly to 1781 m³/m³ (10,000 SCF/bbl). It is preferred for the treat gas rate to be in the range of from 89 m³/m³ (500 SCF/bbl) to 1781 m³/m³ (10,000 SCF/bbl), more preferably, from 178 m³/m³ (1,000 SCF/bbl) to 1602 m³/m³ (9,000 SCF/bbl), and, most preferably, from 356 m³/m³ (2,000 SCF/bbl) to 1425 m³/m³ (8,000 SCF/bbl).

The following examples are presented to further illustrate the invention, but they are not to be construed as limiting the scope of the invention.

### Example I

This Example I describes the preparation of Catalyst A (according to the method of the invention) that was made using solid P₂0₅ as the source of the phosphorus component of the composition, and the preparation of Catalyst B (comparison) that was made using phosphoric acid as the source of the phosphorus component.

### Catalyst A (Catalyst prepared using solid phosphorus pentaoxide)

The Catalyst A was prepared by first combining 3208.56 parts by weight alumina (2% silica-alumina), 251.66 parts by weight nickel nitrate (Ni(NO₃)₂) dissolved in 87.04 parts by weight deionized water, and 638.77 parts by weight crushed hydrotreating catalyst containing MoO₃, NiO and P₂O₅, all of which is in solid form, and 280.97 parts of solid molybdenum trioxide within a Muller mixer along with 130 parts by weight 69.9% concentrated nitric acid and 30 grams of a commercial extrusion aid. A total of 2905.0 parts by weight of water was added to these components during the mixing. The components were mixed for approximately 30 minutes. The mixture had a pH of 4.18 and an LOI of 56.61 weight percent. The mixture was then extruded using 1.3 mm trilobe dies to form 1.3 trilobe extrudate particles. The extrudate particles were then dried in air for a period of several hours at a temperature of 100 °C.

Aliquot portions of the dried extrudate particles were calcined in air each for a period of two hours at a temperature of 676.7 °C (1250 °F). The final calcined mixture contained 2.2 weight percent nickel metal (2.8 wt. % as NiO), and 7.9% molybdenum metal (11.9 wt. % as MoO₃) and 0.8 weight% phosphorus pentoxide P₂O₅, and 84.6 weight percent of alumina containing nominal 2% silica.

The following Table 1 presents certain properties of the dried extrudate particles. As may be seen from the pore properties presented in Table 1, there is a material absence of pores in the 600 Å and greater pore diameter, the median pore diameter is in the range of 80-100 Å, and the surface area as measured by nitrogen adsorption of 323.3 m²/g.

### Catalyst B (Catalyst prepared using phosphoric acid)

The Catalyst B was prepared by first combining 3208.56 parts by weight alumina (2% silica-alumina), 114.64 parts by weight nickel nitrate (Ni(NO₃)₂) dissolved in 39.65 parts by weight deionized water, and 620.93 parts by weight crushed hydrotreating catalyst containing MoO₃ and NiO with material absence of phosphorus in solid form and 388.98 parts of molybdenum trioxide within a Muller mixer along with 128.9 parts by weight 69.9% concentrated nitric acid, 93.05 parts of 85% phosphoric acid (H₃PO₄) and 30 grams of a commercial extrusion aid. A total of 3279.9 parts by weight of water was added to these components during the mixing. The components were mixed for approximately 30 minutes. The mixture had a pH of 3.97 and an LOI of 57.08 weight percent. The mixture was then extruded using 1.3 mm trilobe dies to form 1.3 trilobe extrudate particles. The extrudate particles were then dried in air for a period of several hours at a temperature of 100 °C.

Aliquot portions of the dried extrudate particles were calcined in air each for a period of two hours at a temperature of 676.7 °C (1250 °F). The final calcined mixture contained 2.2 weight percent nickel metal (2.8 wt. % as NiO), and 7.9% molybdenum metal (11.9 wt. % as MoO₃) and 0.8 weight% phosphorus pentoxide, and 84.6 weight percent of alumina containing nominal 2% silica.

The following Table 1 presents certain properties of the dried extrudate particles. As may be seen from the pore properties presented in Table 1, the material absence of pores in the 600A and greater pore diameter and median pore diameter in the range of 80-100 and surface area as measured by nitrogen adsorption of 255.83 m²/g.

**Table 1 - Selected Properties of Catalyst A and Catalyst B**

| Properties | Catalyst A | Catalyst B |
|---|---|---|
| Mix Type | all co-mulled | all co-mulled |
| MoO₃ | 11.85 | 11.85 |
| NiO | 2.75 | 2.75 |
| | | |
| P₂O₅ | 0.76 | 0.76 |
| Mix pH | 4.12 | 3.97 |
| Calcination Temperature | 676.7 °C | 676.7 °C |
| Phosphorus Addition | Solid | Liquid Acid |
| Hg Pore Size Dist. (Angs) | | |
| < 70 | 8.2 | 7.7 |
| 70 - 100 | 69.8 | 51.8 |
| 100 - 150 | 19.3 | 35.2 |
| 150-350 | 2.3 | 4.4 |
| >350 | 0.4 | 0.9 |
| >1000 | 0 | 0.0 |
| >5000 | 0 | 0.0 |
| Total Pore Volume, cc/g | 0.591 | 0.605 |
| Medium Pore Diameter, Å | 93 | 97 |
| Surface Area | 323.32 | 334.05 |

### Example II (Constant Reactor Temperature Example)

This Example describes one of the methods used in testing the catalyst described in Example I. This method provided for the processing of a feedstock having significant sulfur, nitrogen and pitch contents to yield a product having reduced sulfur and nitrogen content. The reactor temperature was kept constant in conducting these reactions and the sulfur content, nitrogen content, and metal content of liquid product were monitored.

A multi-barrel reactor was used to conduct this test. The heating block contained four parallel tube reactors each of which was 0.59 inch ID by 23.625 inches in length 321 stainless steel tube. A single temperature controller was used to control the heater block, which encased all four of the reactors. Each of the tube reactors was loaded in a stacked bed arrangement with 30 cm³ of the catalyst placed at the bottom of the catalyst bed and 6 cm³ of a commercially available hydrodemetallization catalyst placed at the top of the catalyst bed.

The catalyst of the stacked catalyst bed was activated by feeding at ambient pressure a gas mixture of 5 vol. % H₂S and 95 vol. % H₂ to the reactor at a rate of 30 SLPH while incrementally increasing the reactor temperature at a rate of 100 °F/hr up to 400 °F. The catalyst bed was maintained at a temperature of 400 °F for two hours, and, then, the temperature was incrementally increased at a rate of 100 °F/hr to a temperature of 600 °F, where it was held for two hours followed again by an incremental increase in the temperature at a rate of 50 °F/hr up to a temperature of 700 °F, where it was held for two hours before cooling the catalyst bed temperature of 400 °F.

The feedstock charged to the reactor was a Middle Eastern crude. The distillation properties of the feedstock as determined by ASTM Method D7169 are presented in Table 2. Table 3 presents certain other properties of the feedstock.

**Table 2 - Distillation of Feedstock**

| Wt. % | Temp, °C (°F) |
|---|---|
| IBP | |
| 10 | 351 (664) |
| 20 | 399 (750) |
| 30 | 437 (819) |
| 40 | 472 (882) |
| 50 | 510 (950) |
| 60 | 554 (1029) |
| 70 | 602 (1116) |
| 80 | 657 (1215) |
| 90 | 725 (1337) |
| FBP | 733 (1351) |

**Table 3 - Other properties of the feedstock**

| Property | Value |
|---|---|
| Micro-Carbon Residue (MCR) | 12.40 |
| Sulfur (wt %) | 4.544 |
| Nickel (ppm) | 22.0 |
| Vanadium (ppm) | 75.0 |
| 1000 °F + (vol %) | 51.3 |
| Nitrogen, wt. % | 0.257 |

Feedstock was charged to the reactors along with hydrogen gas. The reactors were maintained at a pressure of 1900 psig, and the feedstock was charged to the reactors at a rate so as to provide a liquid hourly space velocity (LHSV) of 0.6 hr⁻¹ and the hydrogen was charged at a rate of 3,000 SCF/bbl. The temperatures of the reactors were fixed at 725 °F for approximately a month and then raised to 752 °F for the remaining duration.

Presented in FIG. 1 are plots (the estimated linear function based on experimental data) of the nitrogen removal activity of the two catalysts. As may be seen from the presented data, Catalyst A prepared according to the method of the invention was significantly more active than Catalyst B. The two catalysts were prepared in a similar manner; except, that, in the preparation of Catalyst A the phosphorus component was added in the solid form, i.e., as P₂O₅, but in the preparation of Catalyst B the phosphorus component was phosphoric acid (H₃PO₄) in solution.

## Claims

1. A method of making a catalyst, wherein said method comprises:
co-mulling an inorganic oxide material, molybdenum trioxide, a nickel compound and an oxide of phosphorus in solid form to thereby form a mixture;
forming said mixture into a particle; and
calcining said particle to thereby provide a calcined particle,
wherein the molybdenum trioxide is in a finely divided state of particles of a maximum dimension of less than 0.5 mm,
and the phosphorus oxide is in a finely divided state of particles having a particle size of from 10 µm to 500 µm.

2. A method as recited in claim 1, wherein said mixture comprises: said inorganic oxide material in an amount in the range of from 40 wt % to 95 wt % of said mixture; said molybdenum trioxide in an amount of in the range upwardly to 16 wt % as an oxide and based on said mixture; said nickel compound in an amount of in the range of upwardly to 4 wt % as an oxide and based on said mixture; and said oxide of phosphorus in an amount in the range of from 0.2 wt % to 8 wt % of said mixture.

3. A method as recited in claim 1 or claim 2, wherein said calcined particle comprises phosphorus present in an amount so as to provide an atomic ratio of phosphorus-to-molybdenum in the range of from 0.04 to 1.

4. A method as recited in any one of claims 1 through 4, wherein said calcined particle has a mean pore diameter in the range of from 70 Å to 130 Å.

5. A method as recited in any one of claims 1 through 5, wherein said calcined particle has a surface area that exceeds 200 m²/g.

6. A process comprising: contacting any one of the compositions made by the methods of claims 1-5 with a hydrocarbon feedstock under hydro treating process conditions and yielding a hydrotreated hydrocarbon product.

## Patentansprüche

1. Verfahren zur Herstellung eines Katalysators, wobei das Verfahren Folgendes umfasst: Co-Mahlen eines anorganischen Oxidmaterials, Molybdäntrioxid, einer Nickelverbindung und eines Phosphoroxids in fester Form, um dadurch eine Mischung zu bilden; Formen der Mischung zu einem Teilchen; und
Kalzinieren des Teilchens, um dadurch ein kalziniertes Teilchen bereitzustellen, wobei sich das Molybdäntrioxid in einem fein verteilten Zustand von Teilchen einer Maximalgröße von weniger als 0,5 mm befindet, und das Phosphoroxid sich in einem fein verteilten Zustand von Teilchen einer Teilchengröße von 10 µm bis 500 µm befindet.

2. Verfahren nach Anspruch 1, wobei die Mischung Folgendes umfasst: das anorganische Oxidmaterial in einer Menge im Bereich von 40 Gew.-% bis 95 Gew.-% der Mischung; das Molybdäntrioxid in einer Menge im Bereich von aufwärts bis 16 Gew.-% als Oxid und basierend auf der Mischung; die Nickelverbindung in einer Menge im Bereich von aufwärts bis 4 Gew.-% als Oxid und basierend auf der Mischung; und das Oxid von Phosphor in einer Menge im Bereich von 0,2 Gew.-% bis 8 Gew.-% der Mischung.

3. Verfahren nach Anspruch 1 oder Anspruch 2, wobei das kalzinierte Teilchen Phosphor umfasst, der in einer Menge vorhanden ist, um ein Atomverhältnis von Phosphor zu Molybdän im Bereich von 0,04 bis 1 bereitzustellen.

4. Verfahren nach einem der Ansprüche 1 bis 4, wobei das kalzinierte Teilchen einen mittleren Porendurchmesser im Bereich von 70 Å bis 130 Ä aufweist.

5. Verfahren nach einem der Ansprüche 1 bis 5, wobei das kalzinierte Teilchen eine Oberfläche aufweist, die 200 m²/g übersteigt.

6. Verfahren, umfassend: Kontaktieren einer beliebigen Zusammensetzung, hergestellt nach den Verfahren der Ansprüche 1-5 mit einem Kohlenwasserstoff-Ausgangsmaterial unter Bedingungen des Hydrobehandlungsprozesses und Gewinnen eines hydrobehandelten Kohlenwasserstoffprodukts.

## Revendications

1. Procédé de fabrication d'un catalyseur, ledit procédé comprenant :
le co-broyage d'un matériau d'oxyde inorganique, d'un trioxyde de molybdène, d'un composé de nickel et d'un oxyde de phosphore sous forme solide pour ainsi former un mélange ;
la formation dudit mélange en une particule ; et
la calcination de la particule pour ainsi obtenir une particule calcinée,
le trioxyde de molybdène étant dans un état finement divisé de particules d'une dimension maximum inférieure à 0,5 mm,
et l'oxyde de phosphore étant dans un état finement divisé de particules dont la taille de particule est comprise entre 10 µm et 500 µm.

2. Procédé selon la revendication 1, dans lequel ledit mélange comprend : ledit matériau d'oxyde inorganique en une quantité dans la plage comprise entre 40 % en poids et 95 % en poids dudit mélange ; ledit trioxyde de molybdène en une quantité supérieure à 16 % en poids sous forme d'oxyde et basé sur ledit mélange ; ledit composé de nickel en une quantité supérieure à 4 % en poids sous forme d'oxyde et basé sur ledit mélange ; et ledit oxyde de phosphore en une quantité dans la plage comprise entre 0,2 % en poids et 8 % en poids dudit mélange.

3. Procédé selon la revendication 1 ou la revendication 2, dans lequel ladite particule calcinée comprend du phosphore présent en une quantité telle de façon à obtenir un rapport atomique de phosphore au molybdène dans la plage comprise entre 0,04 et 1.

4. Procédé selon l'une quelconque des revendications 1 à 4, dans lequel ladite particule calcinée présente un diamètre de pore moyen dans la plage comprise entre 70 Å et 130 Å.

5. Procédé selon l'une quelconque des revendications 1 à 5, dans lequel ladite particule calcinée présente une surface qui dépasse 200 m²/g.

6. Procédé comprenant la mise en contact de l'une quelconque des compositions conçues selon l'une quelconque des revendications 1 à 5 avec une charge d'alimentation en hydrocarbure dans des conditions de procédé d'hydrotraitement et donnant un produit d'hydrocarbure hydrotraité.
